(19) Europäisches Patentamt
European Patent Office
Office européen des brevets

(11) EP 3 604 466 A1

(12) **EUROPEAN PATENT APPLICATION**
published in accordance with Art. 153(4) EPC

(43) Date of publication:
**05.02.2020 Bulletin 2020/06**

(21) Application number: **18777749.5**

(22) Date of filing: **30.03.2018**

(51) Int Cl.:
***C09D 183/04*** *(2006.01)* ***C09D 5/16*** *(2006.01)*
***C09D 7/65*** *(2018.01)* ***C09J 7/20*** *(2018.01)*

(86) International application number:
**PCT/JP2018/013997**

(87) International publication number:
**WO 2018/182023 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2017 JP 2017072838**

(71) Applicant: **Nitto Denko Corporation**
**Ibaraki-shi, Osaka 567-8680 (JP)**

(72) Inventors:
- **HOSHIKO Akie**
**Ibaraki-shi**
**Osaka 567-8680 (JP)**
- **SUZUKI Satoru**
**Ibaraki-shi**
**Osaka 567-8680 (JP)**
- **NAITO Tomonari**
**Ibaraki-shi**
**Osaka 567-8680 (JP)**
- **KURATA Naoki**
**Ibaraki-shi**
**Osaka 567-8680 (JP)**
- **TAKENOUCHI Yuta**
**Ibaraki-shi**
**Osaka 567-8680 (JP)**
- **MURAKOSHI Sakura**
**Ibaraki-shi**
**Osaka 567-8680 (JP)**
- **NAGAO Kohei**
**Ibaraki-shi**
**Osaka 567-8680 (JP)**

(74) Representative: **Gill Jennings & Every LLP**
**The Broadgate Tower**
**20 Primrose Street**
**London EC2A 2ES (GB)**

# (54) COATING FILM FORMING COMPOSITION, COATING FILM, AND ADHESIVE SHEET

(57) An object of the present invention is to provide a coating film forming composition that can form a coating film stably exhibiting an inhibiting effect on the adhesion of aquatic organisms even in the presence of physical factors, for example, water flow in the water. The present invention relates to a coating film forming composition for forming a coating film, the coating film forming composition containing a silicone resin and a silicone oil, wherein a coating film formed of the coating film forming composition satisfies the following (1) and (2). (1) A water contact angle of the coating film after the elapse of 5 minutes after dropping water on the coating film is 80° or less. (2) A water contact angle of the coating film after the elapse of 5 minutes after bringing the coating film into contact with methanol for 3 hours, followed by dropping water on the coating film is 80° or less.

EP 3 604 466 A1

## Description

### TECHNICAL FIELD

The present invention relates to a coating film forming composition for forming a coating film useful to prevent adhesion of aquatic organisms. More specifically, the invention relates to a coating film forming composition for forming a coating film useful to prevent aquatic organisms from adhering to an underwater structure (for example, a ship, a buoy, a harbor facility, a maritime oil field facility, a waterway for power plant cooling water, a waterway for factory cooling water, a water floating passage or various underwater sensors) to proliferate. The present invention further relates to a coating film formed of the coating film forming composition, and an adhesive sheet provided with the coating film.

### BACKGROUND ART

An aquatic organism, for example, a barnacle, an oyster, a blue mussel, a hydra, a serpula, a sea squirt, a moss animal, a sea lettuce, a green laver or an attached diatom adheres to a portion of an underwater structure, for example, a ship in contact with seawater to proliferate, thereby causing an unfavorable state, for example, a reduction in facility mechanical performance, e.g., an increase in fluid resistance or a reduction in thermal conductivity, or diffusion of the adhering marine organism to overseas. In addition, an operation of removing the adhering aquatic organism requires a great deal of labor and an enormous amount of time, which results in economic loss.

In order to prevent the damage as described above, hitherto, the underwater structure is painted with an antifouling paint. The antifouling paint contains a toxic antifouling agent, which, for example, was formerly an organotin compound and is currently cuprous oxide. Although adhesion and growth of the aquatic organism can be suppressed almost completely by the toxicity of the antifouling paint, the toxic antifouling agent, for example, the organotin compound or cuprous oxide causes a serious problem in the long run because the agent adversely affects a human body or an environment to no small extent. In addition, when the antifouling paint is dried after its painting, about 30% by weight of an organic solvent (VOC) volatilizes to adversely affect a work environment or a surrounding environment. In spray-type painting, in addition to discharge of the VOC to the atmosphere, from 10% by weight to 20% by weight of the paint is said to be scattered to the surroundings by the wind. On the other hand, when the structure painted with the antifouling paint that has been used for many years is repainted with a new one, the antifouling paint that has become old is peeled with a sandblast or a metal grinder. At that time, however, a large amount of coating film pieces each containing the toxic antifouling agent, for example, the organotin compound or cuprous oxide are scattered to the surroundings to adversely affect an operator or the environment. In addition, the antifouling paint peeled is treated as industrial waste. Accordingly, the paint has been causing a major problem.

As described above, conventional antifouling paints have an inhibiting effect on the adhesion of aquatic organisms, but adversely affect the human body or the environment to a large extent, which still has many unsolved problems to the present date.

Accordingly, the development of an antifouling paint having an inhibiting effect on the adhesion of aquatic organisms and additionally free of adverse influence to the human body or the environment is desired.

As such an antifouling paint, an antifouling paint characterized in that a thin liquid layer is formed on the surface of a coating film is disclosed in, for example, Patent Literature 1.

### CITATION LIST

### PATENT LITERATURE

Patent Literature 1: JP-A-06-025559

### SUMMARY OF INVENTION

### TECHNICAL PROBLEM

According to the antifouling paint described in Patent Literature 1, by combining a silicone resin with a silicone oil, when a coating film is formed, the silicone oil bleeds on the surface of the coating film and forms an oil layer, and adhesion of aquatic organisms to an underwater structure is inhibited by the silicone oil layer.

However, according to the present inventors' findings, the conventional antifouling paints have the problems that an oil layer by an silicone oil has large thickness as several μm and is liable to be removed from the surface of the coating film in an underwater environment by physical factors, for example, collision of an object such as an organism or a floating substance in the water, and the risk of adhering aquatic organisms to an underwater structure is increased.

Accordingly, an object of the present invention is to provide a coating film forming composition that can form a coating film stably exhibiting an inhibiting effect on the adhesion of aquatic organisms even in the presence of physical factors, for example, water flow in the water.

SOLUTION TO PROBLEM

The present invention relates to a coating film forming composition for forming a coating film, the coating film forming composition containing a silicone resin and a silicone oil, wherein a coating film formed of the coating film forming composition satisfies the following (1) and (2):

(1) a water contact angle of the coating film after the elapse of 5 minutes after dropping water on the coating film is 80° or less; and
(2) a water contact angle of the coating film after the elapse of 5 minutes after bringing the coating film into contact with methanol for 3 hours, followed by dropping water on the coating film is 80° or less.

In a preferred embodiment of the coating film forming composition, the water contact angle of the coating film after the elapse of 5 minutes after bringing the coating film into contact with methanol for 3 hours, followed by dropping water on the coating film in (2) above is 60° or less.
In a preferred embodiment of the coating film forming composition, the silicone oil contains a hydrophilic silicone oil.
In a preferred embodiment of the coating film forming composition, the silicone oil further contains a hydrophobic silicone oil.
In a preferred embodiment of the coating film forming composition, the hydrophilic silicone oil has an HLB of 15 or less.
The present invention further relates to a coating film formed of the coating film forming composition mentioned above.
In a preferred embodiment, the coating film has an elastic modulus of 0.1 MPa or more.
The present invention further relates to an adhesive sheet including the coating film mentioned above, a base material and a pressure-sensitive adhesive layer in this order.

ADVANTAGEOUS EFFECTS OF INVENTION

The coating film forming composition of the present invention can form a coating film stably exhibiting an inhibiting effect on the adhesion of aquatic organisms even in the presence of physical factors such as water flow in the water.

BRIEF DESCRIPTION OF DRAWINGS

Fig. 1 is a view showing the relationship between a water contact angle and an antifouling effect of a coating film.
Fig. 2 is another view showing the relationship between a water contact angle and an antifouling effect of a coating film.
Fig. 3 is a view showing the relationship between the amount of a silicone oil in a coating film and a methanol dipping time of a coating film.

DESCRIPTION OF EMBODIMENTS

Embodiments of the present invention are described in detail below. In the present description, percentage and the like on the basis of mass are synonymous with percentage and the like on the basis of weight.

<Coating film forming composition>

A coating film forming composition of an embodiment is a coating film forming composition for forming a coating film, the coating film forming composition contains a silicone resin and a silicone oil, and a coating film formed of the coating film forming composition satisfies the following (1) and (2):

(1) a water contact angle of the coating film after the elapse of 5 minutes after dropping water on the coating film is 80° or less; and

(2) a water contact angle of the coating film after the elapse of 5 minutes after bringing the coating film into contact with methanol for 3 hours, followed by dropping water on the coating film is 80° or less.

The coating film forming composition of the embodiment contains a silicone resin and a silicone oil, and a coating film formed by the coating film forming composition of the embodiment forms an oil layer by the silicone oil on the surface thereof in an underwater environment. The adhesion of aquatic organisms on the surface of the coating film is suppressed by the oil layer, and an inhibiting effect on the adhesion of aquatic organisms (hereinafter referred to as an antifouling effect) is satisfactorily exhibited.

According to the coating film formed by the coating film forming composition of the embodiment, a water contact angle of the coating film after the elapse of 5 minutes after dropping water on the coating film (hereinafter referred to as a water contact angle after water dropping) is 80° or less, preferably 70° or less, and more preferably 60° or less. According to the coating film having a small water contact angle after water dropping of 80° or less, the antifouling effect by the surface oil layer is satisfactorily exhibited. The lower limit of the water contact angle after water dropping is not particularly limited. The water contact angle of the coating film after water dropping is adjusted by the composition of the coating film forming composition, for example, the kind and content of a hydrophilic silicone oil that can be contained as a silicone oil, the kind and content of a hydrophobic silicone oil that can be used in combination with the hydrophilic silicone oil. In the embodiment, the water contact angle is measured using a contact angle meter (Drop Master, produced by Kyowa Interface Science Co., Ltd.) by a sessile drop method according to JIS R 3257.

Furthermore, according to the coating film formed by the coating film forming composition of the embodiment, a water contact angle of the coating film after the elapse of 5 minutes after bringing the coating film into contact with methanol for 3 hours, followed by dropping water on the coating film (hereinafter referred to as a water contact angle after methanol contact for 3 hours and water dropping) is 80° or less, preferably 70° or less, and more preferably 60° or less.

When the water contact angle after water dropping and the water contact angle after methanol contact for 3 hours and water dropping are 80° or less, the antifouling effect by the surface oil layer is satisfactorily exhibited.

Fig. 1 is a graph showing the relationship between the water contact angle and the antifouling effect of the coating film. The data were obtained by dipping the coating film in sea water at a depth of 1 m in Gamagori, Aichi (Mikawa bay) for 35 days of July 7 to August 10, 2017 and counting the number of barnacles adhered to the coating film. As is apparent from Fig. 1, the water contact angle and antifouling effect of the coating film have the correlation, and it was confirmed that when the water contact angle is about 80° or less, aquatic organisms such as a barnacle do not adhere to the coating film and the antifouling effect is high.

The water contact angles of those coating films are values of the water contact angle after water dropping, but these values do not almost change by merely dipping the coating in sea water for about 35 days that are the period of the test.

In addition, when the water contact angle after water dropping and the water contact angle after methanol contact for 3 hours and then water dropping are 60° or less, the antifouling effect by the surface oil layer is further satisfactorily exhibited.

Fig. 2 is another view showing the relationship between the water contact angle and the antifouling effect of the coating film. The data were obtained by dipping the coating film in sea water at a depth of 1 m in Gamagori, Aichi (Mikawa bay), for 23 days of June 14 to July 7, 2017 and observing the degree of stains originated from diatoms adhered to the coating film. As is apparent from Fig. 2, the water contact angle and antifouling effect of the coating film have the correlation, and it was confirmed that when the water contact angle is about 60° or less, stains originated from diatoms do not almost adhere to the coating film and the antifouling effect is further high.

The methanol dipping time of 3 hours corresponds to the sea water dipping time of about 4 years. Fig. 3 is a graph showing the relationship between a silicone oil amount (the parts of a residual oil) of the coating film and the methanol dipping time of the coating film. When the coating film is dipped in sea water for a long period of time, the oil component diffuses in sea water from the coating film. Sustainability of the antifouling performance of the coating film can be evaluated in a short period of time by accelerating the diffusion of the oil component from the coating film to sea water by methanol dipping. As a result of successively observing the oil component amount at 0 minute, 60 minutes, 120 minutes and 180 minutes after the coating film was dipped in methanol, it could be confirmed that the oil component decreases logarithmically. On the other hand, it is assumed from the value (amount of oil component: 62.6 parts) actually measured when the coating film was dipped in sea water for 5 months that the methanol dipping time of 20 minutes corresponds to sea water dipping time of 5 months.

In other words, it is understood that when the water contact angle after methanol dipping for 3 hours is 80° or less, the antifouling property to aquatic organisms such as a barnacle is maintained for the period of time corresponding to about 4 years.

By bringing the coating film into contact with methanol, the oil layer of a silicone oil formed on the surface of the coating film is dissolved in methanol and removed from the surface of the coating film. In the state that the oil layer is not formed on the surface of the coating film, satisfactory antifouling effect cannot be exhibited and the risk that aquatic

organisms adhere to the surface of the coating film is increased. The water contact angle on the surface of the coating film may change by the formation state of the oil layer on the surface of the coating film. However, according to the coating film formed by the coating film forming composition of the embodiment, the water contact angle after methanol contact for 3 hours and water dropping is 80° or less, and preferably 60° or less, and therefore the coating film can again form the oil layer having a small water contact angle on the surface in a short time by contacting with water even after the oil layer on the surface was removed by the contact with methanol. Therefore, the coating film formed by the coating film forming composition of the embodiment can again form the surface oil layer having a small water contact angle in a short time by contacting with water even after the surface oil layer was removed from the surface of the coating film by physical factors such as water flow in the water, and the antifouling effect can be rapidly restored. The lower limit of the water contact angle after methanol contact and water dropping is not particularly limited. Furthermore, the water contact angle after water dropping of the coating film is adjusted by the composition of the coating film forming composition, for example, the kind and content of a hydrophilic silicone oil that can be contained as a silicone oil, and the kind and content of a hydrophobic silicone oil that can be used in combination with the hydrophilic silicone oil.

The thickness of the oil layer of a silicone oil formed on the surface of the coating film formed by the coating film forming composition of this embodiment by bringing the coating film into contact with water is not particularly limited, but is preferably 1 μm or less, and more preferably 0.5 μm or less. The oil layer becomes difficult to be removed from the surface of the coating film by physical factors such as water flow in the water as the thickness of the oil layer formed is decreased, and the antifouling effect can be exhibited further stably. Even if the oil layer was removed from the surface of the coating film by physical factors in the water, the period until the surface oil layer is again formed by contacting with water becomes shorter, and the antifouling effect can be restored more rapidly.

The coating film forming composition of the embodiment contains a silicone resin.

Any appropriate content may be adopted as the content of the silicone resin in the coating film forming composition depending on the content of any other component, for example, an antifouling agent. The content of the silicone resin in the coating film forming composition is preferably from 30% by weight to 98% by weight, more preferably from 40% by weight to 97% by weight, still more preferably 45% by weight to 96% by weight, and particularly preferably from 50% by weight to 95% by weight. When the content of the silicone resin in the coating film forming composition falls within the range described above, the coating film formed by the coating film forming composition can express its antifouling effect and mechanical characteristics more sufficiently. When the content of the silicone resin in the coating film forming composition is too small, the mechanical characteristics of the coating film are liable to be reduced. When the content of the silicone resin in the coating film forming composition is too large, the coating film is liable to be unable to express its antifouling effect sufficiently.

Any appropriate silicone resin may be adopted as the silicone resin to the extent that the effect of the invention is not impaired. The silicone resin may be used only one kind or may be used two or more kinds. The silicone resin may be a silicone resin which is liquid at normal temperature or may be a silicone resin which is solid at normal temperature. In addition, the silicone resin may be a condensation-type silicone resin or may be an addition-type silicone resin. In addition, the silicone resin may be a one-pack silicone resin to be dried alone or may be a two-pack silicone resin to be compounded with a curing agent.

In view of more expressing the effect of the invention, of those, a two-pack silicone resin is preferred, and a two-pack addition-type silicone resin and a two-pack condensation-type silicone resin are more preferred as the silicone resin in the embodiment. Examples of the two-pack addition-type silicone resin include KE-1935 (A/B), KE-1950-10(A/B), KE-1950-20(A/B), KE-1950-30(A/B), KE-1950-35(A/B), KE-1950-40(A/B), KE-1950-50(A/B), KE-1950-60(A/B), KE-1950-70(A/B), KE-1987(A/B) and KE-1988(A/B) produced by Shin-Etsu Chemical Co., Ltd., an LR7665 series and an LR3033 series produced by Wacker Asahikasei Silicone Co., Ltd., and a TSE3032 series and LSR series produced by Momentive Performance Materials Inc. Examples of the two-pack condensation-type silicone resin include KE108, KE118, KE12, KE17 and KE1417 produced by Shin-Etsu Chemical Co., Ltd.

In order to improve easy removability of aquatic organisms in the coating film formed by the coating film forming composition of the embodiment, the silicone resin is preferably a silicone resin having the property in that the surface of the resin undergoes elastic deformation, for example, by a water pressure at the time of the removal of the organism by water washing to facilitate the peeling of an adhering substance. The silicone resin has a 100% modulus (tensile stress) of preferably from 0.05 MPa to 10 MPa, and more preferably from 0.1 MPa to 6 MPa. In addition, the silicone resin is preferably soluble in an organic solvent.

The coating film forming composition of the embodiment contains a silicone oil.

In the coating film forming composition of the embodiment, the silicone oil is preferably non-reactive silicone oil from the standpoint of, for example, the stability of the coating film.

In addition, in the coating film forming composition of the embodiment, the silicone oil preferably contains a hydrophilic silicone oil. In case where the hydrophilic silicone resin is contained in the silicone oil in the coating film forming composition of the embodiment, when the coating film formed comes into contact with water, the hydrophilic silicone oil is attracted to water and is segregated, thereby forming a continuous oil layer on the surface of the coating

film. As a result, the water contact angle on the surface of the coating film is liable to be decreased.

The hydrophilic silicone oil includes, for example, a polyether-modified silicone oil, a polyglycerin-modified silicone oil and a silicone oil in which a hydrophilic group such as a polyether and a hydrophobic group such as an alkyl are co-modified. In the coating film forming composition of the embodiment, the hydrophilic silicone oil is appropriately selected from those and used to the extent that the above requirements (1) and (2) are satisfied when the coating film was formed. The hydrophilic silicone oil may be used only one kind and may be used two or more kinds.

The hydrophilic group of a polyether-modified silicone oil, a polyglycerin-modified silicone oil, a polyether and the like in those hydrophilic silicone oils may be that the terminal may be a hydroxyl group and may be capped with an alkyl group such as a methyl group.

In the coating film forming composition of the embodiment, the content of the hydrophilic silicone oil with respect to 100 parts by weight of the silicone resin is preferably from 0.01 part by weight to 50 parts by weight, more preferably from 0.05 parts by weight to 45 parts by weight, still more preferably from 0.1 part by weight to 40 parts by weight, yet still more preferably from 0.5 parts by weight to 35 parts by weight, particularly preferably from 0.7 parts by weight to 30 parts by weight, and most preferably from 1.0 part by weight to 25 parts by weight. When the content of the hydrophilic silicone oil with respect to 100 parts by weight of the silicone resin is set to fall within the range described above, the coating film can express the antifouling effect more sufficiently, and can prevent the adhesion of aquatic organisms, for example, algae more effectively over a long period of time.

Of the hydrophilic silicone oils, a polyether-modified silicone oil is preferred from the standpoints of antifouling property and its sustainability. The polyether-modified silicone oil is a polysiloxane having a siloxane bond in the main chain and has one or more polyoxyalkylene group as a substituent. The main chain may form a ring.

The bonding position of the polyoxyalkylene group in the polyether-modified silicone oil may be any appropriate bonding position. For example, the polyoxyalkylene groups may be bound at both terminals of the main chain, the polyoxyalkylene group may be bound at one terminal of the main chain, or the polyoxyalkylene group may be bound to a side chain.

In order to more sufficiently express the effect of the invention, a side chain type (straight-chain type) polyether-modified silicone oil in which a polyoxyalkylene group is bound to a side chain is preferably selected as the polyether-modified silicone oil.

The side chain type (straight-chain type) polyether-modified silicone oil is preferably represented by formula (1).

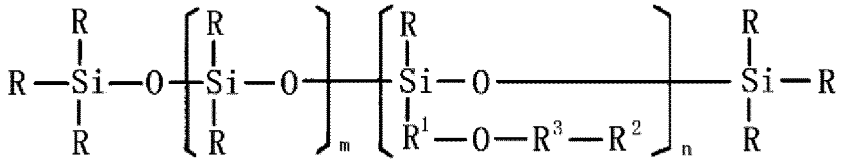

(1)

In formula (1), R each independently represents an alkyl group having from 1 to 3 carbon atoms, $R^1$ represents an alkylene group having from 1 to 4 carbon atoms, $R^2$ represents a hydrogen atom or an alkyl group having from 1 to 15 carbon atoms, $R^3$ is a polyoxyalkylene group represented by $-(C_2H_4O)_a-(C_3H_6O)_b-$, a is from 1 to 50, b is from 0 to 30, m is from 1 to 7,000, and n is from 1 to 50.

In formula (1), R is preferably a methyl group.

The coating film forming composition of the embodiment preferably contains a hydrophilic silicone oil having a viscosity (dynamic viscosity) of 50,000 $mm^2/s$ or less. In the case of containing two or more kinds of hydrophilic silicone oils, the viscosity means a viscosity as a mixture thereof.

The hydrophilic silicone oil exhibits satisfactory antifouling effect by that when the coating film comes into contact with water, the hydrophilic silicone oil is attracted to the surface of the coating film and is segregated thereon to form a thin oil layer, thereby exhibiting satisfactory antifouling effect. A rate that the hydrophilic silicone oil is attracted to the surface of the coating film when the coating film came into contact with water becomes faster as the viscosity of the hydrophilic silicone oil is small, and as a result, the water contact angle after water dropping and the water contact angle after methanol contact and water dropping are liable to be decreased. Therefore, the antifouling effect is satisfactorily exhibited, and even when the oil layer on the surface of the coating film was removed by physical factors in the water, the oil layer is again formed in a shorter time by contacting with water and the antifouling effect can be restored more quickly. From those standpoints, the viscosity of the hydrophilic silicone oil is preferably 10,000 $mm^2/s$ or less, more preferably 5,000 $mm^2/s$ or less, still more preferably 1,000 $mm^2/s$ or less, particularly preferably 400 $mm^2/s$ or less, and most preferably 150 $mm^2/s$ or less. The lower limit of the viscosity of the hydrophilic silicone oil is not particularly limited, but is, for example, 10 $mm^2/s$ or more from the standpoint of sustainability of an antifouling property.

The viscosity (dynamic viscosity) of the hydrophilic silicone oil in the embodiment is measured by Ubbelohde viscometer according to ASTM D 445-46T or JIS Z 8803.

The polyether-modified silicone oil that can be contained in the coating film forming composition of the embodiment includes, for example, a side chain type (straight-chain type) polyether-modified silicone oil, e.g., KF-6011 (HLB: 14.5), KF-6011P (HLB: 14.5), KF-6012 (HLB: 7.0), KF-6013 (HLB: 10.0), KF-6015 (HLB: 4.5), KF-6016 (HLB: 4.5), KF-6017 (HLB: 4.5), KF-6017P (HLB: 4.5), KF-6043 (HLB: 14.5), KF-6004 (HLB: 9.0), KF351A, KF352A, KF353, KF354L, KF355A, KF615A, KF945, KF-640, KF-642, KF-643, KF-644, KF-6020, KF-6204 or X-22-4515 (trade names) produced by Shin-Etsu Chemical Co., Ltd.; a side chain type (branched-chain type) polyether-modified silicone oil, e.g., KF-6028 (HLB: 4.0) or KF-6028P (HLB: 4.0) (trade names) produced by Shin-Etsu Chemical Co., Ltd.; a side chain type (branched-chain type, alkyl co-modified type) polyether-modified silicone oil, e.g., KF-6038 (HLB: 3.0) (trade name) produced by Shin-Etsu Chemical Co., Ltd.; Silwet L-7602 (HLB: 7.3), Silwet L-7600 (HLB: 14.3), Silwet L-7604 (HLB: 10.6), Silwet L-7622 (HLB: 8) or Silwet L-7657 (HLB: 12.9) (trade names) produced by Momentive; FZ-2162 (HLB: 14) (trade name) produced by Dow Corning Toray Co., Ltd.; and TSF 4446 (HLB: 6.2), TSF 4445 (HLB: 7) or TSF4440 (HLB: 14) (trade names) produced by Momentive.

In the embodiment, the hydrophilic silicone oil is a silicone oil having HLB of 1 or more. The HLB of the hydrophilic silicone oil is preferably 15 or less, more preferably 9 or less, still more preferably 7.5 or less, and particularly preferably 5 or less. When the HLB of the hydrophilic silicone oil falls within the range described above, the decrease of elastic modulus (strength) of the coating film formed is suppressed, and the antifouling effect can be further sustained. In addition, deformation by external force of the coating film is prevented, and as a result, forcible bleed of the hydrophilic silicone oil from the silicone resin by physical factors is suppressed. The HLB refers to a hydrophilic-lipophilic balance numerically indicated the balance between hydrophilicity and lipophilicity of oil, and is an abbreviation of Value of Hydrophile and Liophile Balance. The HLB of the polyether-modified silicone oil can be controlled, for example, by selecting chain lengths of polyether polyoxyalkylene chain (group) and dimethyl siloxane chain (group) or by selecting chain lengths of hydrophilic polyethylene oxide and more hydrophobic polypropylene oxide of the polyether polyoxyalkylene chains (groups).

Specifically, the HLB can be obtained by, for example, the following formula:

HLB value = (Total of mass % value of hydrophilic group (oxyethylene unit, OH group) occupied in molecule)/5

Chain length of a hydrophilic polyethylene oxide chain (group) (hereinafter referred to as PEO chain) of polyether polyoxyalkylene chains (groups) that the polyether-modified silicone oil has is preferably 3 or more, more preferably 6 or more, and still more preferably 9 or more. When the chain length of the PEO chain is 3 or more, affinity with water is high. Therefore, the water contact angle after water dropping and the water contact angle after methanol contact and water dropping can be further decreased. In addition, the chain length of the PEO chain is, for example, 20 or less from the standpoint of compatibility with the silicone resin.

In the coating film forming composition of the embodiment, the silicone oil may further contain a hydrophobic silicone oil in addition to the hydrophilic silicone oil such as a polyether-modified silicone oil in order to facilitate the formation of a continuous oil layer on the surface of the coating film. The hydrophobic silicone oil may be only one kind and may be two or more kinds.

In the embodiment, the hydrophobic silicone oil is a silicone oil having HLB of less than 1.

When the silicone oil contains the hydrophobic silicone oil together with the hydrophilic silicone oil, the hydrophilic silicone oil and hydrophobic silicone oil bleed from the silicone resin to form an oil layer on the surface of the coating film. It is considered that the hydrophilic silicone oil is attracted to the surface of the coating film by the contact of the coating film with water and is segregated to form a thin oil layer and a hydrated layer is formed on the hydrophilic silicone oil layer. It is further considered that the hydrated layer constitutes the surface of an antifouling layer and the adhesion of aquatic organisms such as a barnacle and a seaweed can be prevented. The hydrophilic silicone layer becomes a continuous and stable state owing to the hydrophobic silicone oil. The thickness of the oil layer constituted of the hydrophilic silicone oil and the hydrophobic silicone oil is not particularly limited. However, the thickness of the oil layer is preferably 1 $\mu$m or less, and more preferably 0.5 $\mu$m or less. The oil layer is difficult to be removed from the coating film surface by physical factors such as water flow as the thickness of the oil layer formed is small, and the oil layer can be further stably exhibit the antifouling effect. In addition, even when the oil layer was removed from the surface of the coating film by physical factors in the water, the period until the surface oil layer is again formed by the contact with water becomes shorter and the antifouling effect can be restored more rapidly.

In the embodiment, the hydrophobic silicone oil includes, for example, a hydrophobic non-reactive silicone oil.

The hydrophobic non-reactive silicone oil may be a polysiloxane composed of a siloxane bond in the main chain and may have a substituent. The main chain may form a ring. The hydrophobic non-reactive silicone oil includes, for example, a straight silicone oil, and a modified silicone oil (excepting for the polyether-modified silicone oil).

The substituent in the straight silicone oil is preferably a methyl group or a phenyl group.

The bonding position of the substituent in the straight silicone oil may be any appropriate bonding position. For example, the substituents may be bound to both terminals of the main chain, the substituent may be bound to one terminal of the main chain, or the substituent may be bound to a side chain.

The hydrophobic non-reactive silicone oil is preferably represented by formula (2).

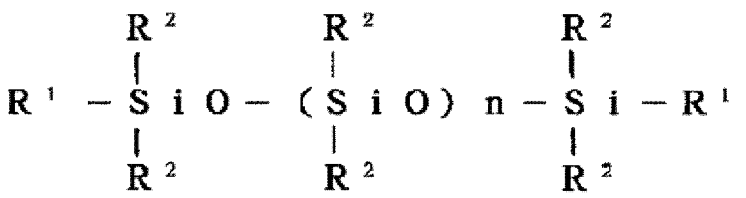

(2)

In formula (2), $R^1$'s, which may be the same or different, each represent an alkyl group having from 1 to 10 carbon atoms, an aryl group, an aralkyl group, a fluoroalkyl group or a hydroxyl group, $R^2$'s, which may be the same or different, each represent an alkyl group having from 1 to 10 carbon atoms, an aryl group, an aralkyl group or a fluoroalkyl group, and n represents an integer from 0 to 150. $R^1$ in formula (2) is preferably a methyl group, a phenyl group or a hydroxyl group. $R^2$ in formula (2) is preferably a methyl group, a phenyl group or a 4-trifluorobutyl group.

The silicone oil represented by formula (2) has a number average molecular weight of preferably from 180 to 20,000, and more preferably from 1,000 to 10,000.

The silicone oil represented by formula (2) has a viscosity of preferably from 10 $mm^2/s$ to 10,000 $mm^2/s$, and more preferably from 100 $mm^2/s$ to 5,000 $mm^2/s$.

Specific examples of the silicone oil represented by formula (2) include a terminal hydroxyl group-containing dimethyl silicone oil in which $R^1$ at each of both terminals or one terminal represents a hydroxyl group, a dimethyl silicone oil in which all of $R^1$ and $R^2$ each represent a methyl group, and a phenyl methyl silicone oil obtained by substituting a part of the methyl groups of any such dimethyl silicone oil with phenyl groups.

The hydrophobic non-reactive silicone oil includes, for example, KF96L, KF96, KF69, KF99, KF50, KF54, KF410, KF412, KF414, KF415 and FL (trade names) produced by Shin-Etsu Chemical Co., Ltd; and BY16-846, SF8416, SH200, SH203, SH230, SF8419, FS1265, SH510, SH550, SH710, FZ-2110 and FZ-2203 (trade names) produced by Dow Corning Toray Co., Ltd.

The content of the hydrophobic silicone oil with respect to 100 parts by weight of the silicone resin is preferably from 10 parts by weight to 120 parts by weight, more preferably from 15 parts by weight to 110 parts by weight, still more preferably from 20 parts by weight to 100 parts by weight, and particularly preferably from 25 parts by weight to 95 parts by weight. When the content of the hydrophobic silicone oil with respect to 100 parts by weight of the silicone resin falls within the range described above, a continuous oil layer is liable to be sustainably formed on the coating film surface together with the hydrophilic silicone oil when the coating film is placed in the underwater environment.

When the silicone oil contains the hydrophobic silicone oil together with the hydrophilic silicone oil, the ratio of the content of the hydrophobic silicone oil to the content of the hydrophilic silicone oil (content of the hydrophobic silicone oil/content of hydrophilic silicone oil) is preferably 0.6 or more, more preferably 1.0 or more, and still more preferably 1.5 or more.

When the ratio of the content of the hydrophobic silicone oil to the content of the hydrophilic silicone oil is set to fall within the range described above, the hydrophilic oil is held by the hydrophobic oil. As a result, the removal of the hydrophilic oil by methanol contact is suppressed and a long-term antifouling performance is more sufficiently expressed.

In addition, the ratio is preferably 12.0 or less, more preferably 6.0 or less, and still more preferably 4.0 or less.

When the ratio of the content of the hydrophobic silicone oil to the content of the hydrophilic silicone oil is set to fall within the range described above, the hydrophilic oil remains even after methanol contact. As a result, a long-term antifouling performance is more sufficiently expressed.

The total content of the silicone oil with respect to 100 parts by weight of the silicone resin is preferably from 1 part by weight to 150 parts by weight, more preferably from 40 parts by weight to 140 parts by weight, still more preferably 45 parts by weight to 130 parts by weight, yet still more preferably from 50 parts by weight to 120 parts by weight, yet still more preferably from more than 50 parts by weight and 110 parts by weight or less, particularly preferably from 60 parts by weight to 100 parts by weight, and most preferably from 70 parts by weight to 95 parts by weight. When the total amount of the silicone oil with respect to 100 parts by weight of the silicone resin is set to fall within the range described above, the antifouling layer can express the antifouling effect more sufficiently and additionally the antifouling layer can express external appearance characteristics and mechanical characteristics more sufficiently. When the total amount of the silicone oil with respect to 100 parts by weight of the silicone resin is too small, there is a possibility that the antifouling layer cannot sufficiently express the antifouling effect. On the other hand, when the total amount of the

silicone oil with respect to 100 parts by weight of the silicone resin is too large, there is a possibility that the finally molded article and the coating film have poor external appearance and additionally there is a possibility that the strength of the antifouling layer is decreased and the antifouling layer cannot maintain the antifouling property.

The coating film forming composition may contain any appropriate other oil to the extent that the effect of the invention is not impaired. The other oil includes, for example, a liquid paraffin, a surfactant, a liquid hydrocarbon, a fluorinated oil, an antimicrobial agent, a wax, petrolatum, an animal fat, a fatty acid, a diatom adhesion preventing agent, an agricultural chemical, a pharmaceutical (for example, medetomidine), an enzyme activity inhibitor (for example, an alkylphenol or an alkylresorcinol) and an organism repellent. The other oil may be used only one kind or may be used two or more kinds.

When the coating film forming composition contains the other oil, there are cases where the coating film can express an antifouling effect more sufficiently, the adhesion of aquatic organisms can be more effectively prevented over a long period of time, and also the coating film can express the external appearance characteristics and mechanical characteristics more sufficiently.

Any appropriate liquid paraffin may be adopted as the liquid paraffin to the extent that the effect of the invention is not impaired. The liquid paraffin includes, for example, P-40, P-55, P-60, P-70, P-80, P-100, P-120, P-150, P-200, P-260 and P-350 produced by MORESCO Corp. and a hydrocarbon-based liquid paraffin produced by Wako Pure Chemical Industries, Ltd.

When the coating film forming composition contains the liquid paraffin, there are cases where the coating can express the antifouling effect still more sufficiently, and the adhesion of aquatic organisms can be still more effectively prevented over a long period of time.

In the case where the coating film forming composition contains the liquid paraffin, the content of the liquid paraffin with respect to 100 parts by weight of the silicone resin is preferably from 0.1 part by weight to 50 parts by weight, more preferably from 0.5 parts by weight to 30 parts by weight, still more preferably from 1 part by weight to 25 parts by weight, and particularly preferably from 1 part by weight to 20 parts by weight. When the content of the liquid paraffin with respect to 100 parts by weight of the silicone resin is set to fall within the range described above, the coating film can express the antifouling effect more sufficiently, and the adhesion of aquatic organisms can be more effectively prevented over a long period of time.

The surfactant includes, for example, an anionic surfactant, a nonionic surfactant, an amphoteric surfactant and a cationic surfactant.

Any appropriate anionic surfactant may be adopted as the anionic surfactant to the extent that the effect of the invention is not impaired. The anionic surfactant includes, for example, an alkylbenzenesulfonate, an alkyl or alkenyl ether sulfate, an alkyl or alkenylsulfate, an $\alpha$-olefinsulfonate, an $\alpha$-sulfofatty acid or $\alpha$-sulfofatty acid ester salt, an alkanesulfonate, a saturated or unsaturated fatty acid salt, an alkyl or alkenyl ether carboxylate, an amino acid-type surfactant, an N-acylamino acid-type surfactant and an alkyl or alkenylphosphate ester or salts thereof. The anionic surfactant may be used only one kind or may be used two or more kinds.

Any appropriate nonionic surfactant may be adopted as the nonionic surfactant to the extent that the effect of the invention is not impaired. The nonionic surfactant includes, for example, a polyoxyalkylene alkyl or alkenyl ether, a polyoxyethylene alkylphenyl ether, a higher fatty acid alkanolamide or an alkylene oxide adduct thereof, a sucrose fatty acid ester, an alkyl glycoside, a fatty acid glycerol monoester and an alkylamine oxide. The nonionic surfactant may be used only one kind or may be used two or more kinds.

Any appropriate amphoteric surfactant may be adopted as the amphoteric surfactant to the extent that the effect of the invention is not impaired. The amphoteric surfactant includes, for example, a carboxy-type or sulfobetaine-type amphoteric surfactant. The amphoteric surfactant may be used only one kind or may be used two or more kinds.

Any appropriate cationic surfactant may be adopted as the cationic surfactant to the extent that the effect of the invention is not impaired. The cationic surfactant includes, for example, a quaternary ammonium salt. The cationic surfactant may be used only one kind or may be used two or more kinds.

Any appropriate antimicrobial agent may be adopted as the antimicrobial agent to the extent that the effect of the invention is not impaired. The antimicrobial agent includes a so-called antimicrobial agent and a herbicide.

The so-called antimicrobial agent includes, for example, azoxystrobin, benalaxyl, benomyl, bitertanol, bromuconazol, captafol, captan, carbendazim, chinomethionate, chlorothalonil, chlozolinate, cyprodinil, dichlofluanid, diclofen, diclomezine, dichloran, diethofencarb, dimethomorph, diniconazole, dithianon, epoxiconazole, famoxadone, fenarimol, fenbuconazol, fenfuram, fenpiclonil, fentin, fluazinam, fludioxonil, fluoroimide, fluquinconazole, flusulfamide, flutolanil, folpet, hexachlorobenzene, hexaconazole, imibenconazole, ipconazole, iprodione, kresoxim-methyl, manzeb, maneb, mepanipyrim, mepronil, metconazole, metiram, nickel bis(dimethyl dithiocarbamate), nuarimol, oxine copper, oxophosphoric acid, pencycuron, phthalide, procymidone, propineb, quintozene, sulfur, tebuconazole, teclofthalam, tecnazene, thifluzamide, thiophenate-methyl, thiram, tolclofos-methyl, tolylfluanid, triadimefon, triadimenol, triazoxide, triforine, triticonazole, vinclozolin, zineb and ziram. In addition, the antimicrobial agent which is a natural product includes a Chinese medicine ingredient, for example, a moso bamboo extract, hinokitiol, a garlic extract and glycyrrhiza. In addition, the

antimicrobial agent includes an inorganic antimicrobial agent, for example, silver, copper, zinc, tin, lead and gold. In addition, for example, zeolite, hydroxyapatite, calcium carbonate, silica gel, aluminum calcium silicate, a polysiloxane compound, zirconium phosphate, zirconium sulfate, an ion exchanger or zinc oxide may be used as a support for the inorganic antimicrobial agent, if desired. The antimicrobial agent which is a synthetic product includes, for example, 2-pyridinethiol-1-oxide, p-chloro-m-cresol, polyhexamethylene biguanide, hydrochloride, benzethonium chloride, an alkylpolyaminoethylglycine, benzisothiazolin, 5-chloro-2-methyl-4-isothiazolin-3-one, 1,2-benzisothiazolin-3-one and 2,2'-dithiobis(pyridine-1-oxide).

The herbicide includes, for example, bensulfuron-methyl, pyrazosulfuron-ethyl, imazosulfuron, cyclosulfamuron, ethoxysulfuron, flucetosulfuron, azimsulfuron, primisulfuron, prosulfuron, rimsulfuron, halosulfuron-methyl, nicosulfuron, thifensulfuron-methyl, tritosulfuron, foramsulfuron, amidosulfuron, chlorsulfuron, iodosulfuron, metsulfuron-methyl, sulfosulfuron, flazasulfuron, chlorimuron-ethyl, triflusulfuron-methyl, oxasulfuron, sulfometuron-methyl, trifloxysulfuron sodium, flupyrsulfuron-ethyl-sodium, imazamox, imazethapyr, imazaquin, imazapyr, imazapic, flucarbazone-sodium, propoxycarbazone-sodium, bispyribac-sodium, pyriftalid, pyriminobac-methyl, pyrimisulfan, pyrithiobac-sodium, flumetsulam, penoxsulam, metosulam, metazosulfuron, propyrisulfuron, bentazon, atrazine, simazine, dimethametryn, pyridate, pyridafol, terbuthylazine, terbutryn, bromoxynil, ioxynil, metribuzin, lenacil, bromacil, desmedipham, phenmedipham, metamitron, simetryn, prometryn, diuron, isouron, linuron, siduron, chlorotoluron, benzofenap, pyrazolate, pyrazoxyfen, benzobicyclon, isoxaflutole, tefuryltrione, tembotrione, isoxachlortole, mesotrione, sulcotrione, benzoylhexadione, pretilachlor, butachlor, cafenstrole, fentrazamide, mefenacet, etobenzanid, thenylchlor, flufenacet, indanofan, anilofos, metolachlor, metazachlor, alachlor, propachlor, piperophos, dimethenamid, acetochlor, napropamid, thiobencarb, molinate, benfuresate, pyributicarb, ethofumesate, esprocarb, prosulfocarb, dalapon, butyrate, pentoxazone, pyraclonil, oxadiazon, oxadiargyl, pyrazil, oxyfluorfen, acifluorfen, bifenox, pyraflufen-ethyl, fluazolate, fluthiacet-methyl, butafenacil, benzfendizone, carfentrazon-ethyl, sulfentrazone, flumioxazin, aclonifen, flumiclorac, prohexadione, sethoxydim, clethodim, tepraloxydim, alloxydim, fenoxaprop-P-ethyl, diclofop-methyl, fluazifop-P-butyl, quizalofop-P-ethyl, cyhalofop-butyl, glufosinate, glufosinate-P, bialaphos, glyphosate, glyphosate isopropylamine, sulfosate, picloram, triclopyr, clomeprop, MCPB, 2,4-D,MCPA, dicamba, quinchlorac, mecoprop, dichlorprop, diflufenican, flurtamone, picolinafen, fluridon, norflurazon, beflubutamid, flurochloridon, paraquat, diquat, butamifos, pendimethalin, trifluralin, dithiopyr, thiazopyr, amiprophos-methyl, bromobutide, cumyluron, dymron, isoxaben, dichlobenil, flupoxam, chlorthiamid, oxaziclomefone, ipfencarbazone, fenoxasulfone, SW-065, pelargonic acid, clomazone, and salts thereof.

The coating film forming composition may contain any other appropriate additive to the extent that the effect of the invention is not impaired. The other additive is, for example, an ultraviolet absorbing agent as a weathering agent. Specific examples of the ultraviolet absorbing agent include TINUVIN571, TINUVIN460, TINUVIN213, TINUVIN234, TINUVIN329 and TINUVIN326 (trade names) produced by BASF. The addition amount of the ultraviolet absorbing agent is preferably 0.5 parts by weight or more and less than 10 parts by weight with respect to 100 parts by weight of the silicone resin. When the addition amount of the ultraviolet absorbing agent with respect to the silicone resin is set to fall within the range described above, the effect as the weathering agent may be sufficiently expressed without inhibiting the formation of the coating. In addition, the other additive includes a light stabilizer. Specific examples of the light stabilizer include TINUVIN123, TINUVIN292 and TINUVIN5100 (trade names) produced by BASF. The addition amount of the light stabilizer is preferably 0.5 parts by weight or more and less than 10 parts by weight with respect to 100 parts by weight of the silicone resin. When the addition amount of the light stabilizer with respect to the silicone resin is set to fall within the range described above, the effect as the light stabilizer may be sufficiently expressed without inhibiting the formation of the coating film.

A filler or the like can be added to the coating film forming composition in order to increase strength. The filler includes, for example, silica particle and diatomaceous earth. In addition, as the filler, particle having a hydrophobically treated surface is preferred in view of dispersibility. The surface treatment method includes a method of surface treatment with dimethylpolysiloxane, dimethyldichlorosilane, hexamethyldisilazane, cyclic dimethylsiloxane or the like. The size of the particle having the hydrophobically treated surface is preferably from 5 nm to 300 nm in terms of average particle diameter. When the size of the particle having the hydrophobically treated surface is set to fall within the range described above, a sufficient strength may be imparted to the coating film, and also the particles may be uniformly dispersed in the coating film so that cracks may be hardly generated when applied an impact on the coating film. In addition, the adhesion between the coating film and the base material layer may also be increased. The addition amount of the particle having hydrophobically treated surface is preferably from 0.1% by weight to 10% by weight with respect to the silicone resin. When the addition amount of the particle having hydrophobically treated surface is set to fall within the range described above, a sufficient strength may be imparted to the coating film, and also the material added to the coating film may be uniformly dispersed so that coating may be precisely performed on an adherend.

The particle having hydrophobically treated surface includes, for example, hydrophobic fumed silica produced by Nippon Aerosil Co., Ltd., and specific examples thereof include an AEROSIL (registered trademark) RX series (RX50, RX200, RX300 and the like) (trade names), an AEROSIL (registered trademark) RY series (RY50, RY200, RY200S and the like), an AEROSIL (registered trademark) NY50 series, an AEROSIL (registered trademark) NAX series and an

AEROSIL (registered trademark) R series produced by Nippon Aerosil Co., Ltd.

The coating film forming composition of the embodiment may be directly painted to an adherend such as an underwater structure (for example, a ship, a buoy, a harbor facility, a maritime oil field facility, a waterway for power plant cooling water, a waterway for factory cooling water, a water floating passage or various sensors) by the conventional coating method, for example, spraying, brush coating, rollers, curtain flowing, rolls, dipping or coater and dried at a temperature of, for example, from 0°C to 250°C (preferably a temperature of from room temperature to 180°C, and more preferably a temperature of from room temperature to 160°C) for, for example, from 2 minutes to 12 hours, thereby the coating film can be formed on the surface of the adherend. Moreover, as described hereinafter, the coating film forming composition of the embodiment may be applied to the surface of a base material layer of an adhesive sheet having the base material layer and a pressure-sensitive adhesive layer and dried to form a coating film so that the form of an adhesive sheet having a coating film (antifouling layer), a base material layer and a pressure-sensitive adhesive layer in this order can be achieved.

<Coating film>

The coating film of the embodiment is a coating film formed by the coating film forming composition described above and is useful to prevent the adhesion of an aquatic organism. In other words, the coating film of the embodiment contains a silicone resin and a silicone oil, also satisfies the following (1) and (2) and can exhibit stably the inhibiting effect on adhesion to an aquatic organism even in the presence of physical factors such as water flow in the water. In the description, the coating film of the embodiment is sometimes referred to as an antifouling layer.

(1) a water contact angle of the coating film after the elapse of 5 minutes after dropping water on the coating film is 80° or less; and

(2) a water contact angle of the coating film after the elapse of 5 minutes after bringing the coating film into contact with methanol for 3 hours, followed by dropping water on the coating film is 80° or less.

The coating film of the embodiment preferably has elastic modulus of 0.1 MPa or more. When the elastic modulus of the coating film is 0.1 MPa or more, strength of the coating film is sufficiently high and the antifouling effect can be further sustained. In addition, deformation by external force of the coating film is prevented, and forcible bleed of the silicone oil from the silicone resin by physical factors is suppressed. The elastic modulus of the coating film is more preferably 0.15 MPa or more, and still more preferably 0.2 MPa or more. The elastic modulus of the coating film is, for example, 10 MPa or less from the standpoint of easy peeling of an adherend by elastic deformation of the surface of a resin by, for example, water pressure at the time of water washing removal.

Any appropriate thickness may be adopted as the thickness of the coating film depending, for example, on the applications and use environment. The thickness of the coating film is preferably from 10 μm to 5,000 μm. When the thickness of the coating film falls within the range described above, the coating film effectively expresses its antifouling effect for a sufficiently long period of time. When the thickness of the coating film is less than 10 μm, the coating film is liable to be impractical because the time period for which the coating film effectively expresses its antifouling effect is reduced. When the thickness of the coating film is more than 5,000 μm, the coating film is liable to be impractical because the preparation of the coating film requires much time.

<Adhesive sheet>

The coating film forming composition described above may form a coating film by directly painting the composition to an adherend, for example, an underwater structure and drying the composition, as described before. However, for example, the coating film forming composition may be painted onto the surface of a base material layer of an adhesive sheet having the base material layer and a pressure-sensitive adhesive layer and dried to form a coating film, thereby obtaining an adhesive sheet having the coating film (antifouling layer), the base material layer and the pressure-sensitive adhesive layer in this order, and the adhesive sheet may be adhered to an adherend.

A material for the base material layer includes, for example, a polyurethane resin, a polyurethane acryl resin, a rubber-based resin, a vinyl chloride resin, a polyester resin, a silicone resin, elastomers, a fluorine resin, a polyamide resin, and a polyolefin resin (for example, polyethylene or polypropylene). The material of the base material layer may be only one kind and may be two or more kinds.

Any appropriate pressure-sensitive adhesive layer may be adopted as the pressure-sensitive adhesive layer to the extent that the effect of the invention is not impaired. A material for the pressure-sensitive adhesive layer includes, for example, an acrylic resin-based pressure-sensitive adhesive, an epoxy resin-based pressure-sensitive adhesive, an amino resin-based pressure-sensitive adhesive, a vinyl resin-based (e.g., vinyl acetate-based polymer) pressure-sensitive adhesive, a curable acrylic resin-based pressure-sensitive adhesive and a silicone resin-based pressure-sensitive

adhesive. The material for the pressure-sensitive adhesive layer may be used only one kind or may be used two or more kinds.

Examples

The invention will be described specifically with reference to the examples, but the invention should not be construed as being limited thereto.

(Example 1)

A coating film forming composition of Example 1 was prepared by mixing 100 parts by weight of silicone resin 1 (addition-type silicone resin, KE-1935 (trade name) produced by Shin-Etsu Silicone Co., Ltd.), 10 parts by weight of hydrophilic silicone oil 1 (polyether-modified silicone oil, KF6015 (trade name) produced by Shin-Etsu Silicone Co., Ltd., HLB: 4.5, chain length of PEO chain: 3, viscosity: 130 $mm^2/s$), 5 parts by weight of hydrophilic silicone oil 2 (polyether-modified silicone oil, KF6016 (trade name) produced by Shin-Etsu Silicone Co., Ltd., HLB: 4.5, chain length of PEO chain: 9, viscosity: 150 $mm^2/s$), 25 parts by weight of hydrophobic silicone oil 1 (non-reactive silicone oil, KF96-100 (trade name) produced by Shin-Etsu Silicone Co., Ltd.), and 30 parts by weight of hydrophobic silicone oil 2 (non-reactive silicone oil, KF415 (trade name) produced by Shin-Etsu Silicone Co., Ltd.).

(Example 2)

A coating film forming composition of Example 2 was prepared in the same manner as in Example 1, except for using 15 parts by weight of the hydrophilic silicone oil 2 (polyether-modified silicone oil, KF6016 (trade name) produced by Shin-Etsu Silicone Co., Ltd.) as the hydrophilic silicone oil in place of 10 parts by weight of the hydrophilic silicone oil 1 (polyether-modified silicone oil, KF6015 (trade name) produced by Shin-Etsu Silicone Co., Ltd.) and 5 parts by weight of the hydrophilic silicone oil 2 (polyether-modified silicone oil, KF6016 (trade name) produced by Shin-Etsu Silicone Co., Ltd.).

(Example 3)

A coating film forming composition of Example 3 was prepared in the same manner as in Example 1, except for using 15 parts by weight of the hydrophilic silicone oil 1 (polyether-modified silicone oil, KF6015 (trade name) produced by Shin-Etsu Silicone Co., Ltd.) as the hydrophilic silicone oil in place of 10 parts by weight of the hydrophilic silicone oil 1 (polyether-modified silicone oil, KF6015 (trade name) produced by Shin-Etsu Silicone Co., Ltd.) and 5 parts by weight of the hydrophilic silicone oil 2 (polyether-modified silicone oil, KF6016 (trade name) produced by Shin-Etsu Silicone Co., Ltd.).

(Example 4)

A coating film forming composition of Example 4 was prepared in the same manner as in Example 2, except for using 55 parts by weight of the hydrophobic silicone oil 1 (non-reactive silicone oil, KF96-100 (trade name) produced by Shin-Etsu Silicone Co., Ltd.) as the hydrophobic silicone oil in place of 25 parts by weight of the hydrophobic silicone oil 1 (non-reactive silicone oil, KF96-100 (trade name) produced by Shin-Etsu Silicone Co., Ltd.) and 30 parts by weight of the hydrophobic silicone oil 1 (non-reactive silicone oil, KF415 (trade name) produced by Shin-Etsu Silicone Co., Ltd.).

(Example 5)

A coating film forming composition of Example 5 was prepared in the same manner as in Example 1, except for using 55 parts by weight of the hydrophobic silicone oil 1 (non-reactive silicone oil, KF96-100 (trade name) produced by Shin-Etsu Silicone Co., Ltd.) as the hydrophobic silicone oil in place of 25 parts by weight of the hydrophobic silicone oil 1 (non-reactive silicone oil, KF96-100 (trade name) produced by Shin-Etsu Silicone Co., Ltd.) and 30 parts by weight of the hydrophobic silicone oil 1 (non-reactive silicone oil, KF415 (trade name) produced by Shin-Etsu Silicone Co., Ltd.).

(Example 6)

A coating film forming composition of Example 6 was prepared by mixing 100 parts by weight of silicone resin (condensation-type silicone resin, KE-17 (trade name) produced by Shin-Etsu Silicone Co., Ltd.), 10 parts by weight of hydrophilic silicone oil 1 (polyether-modified silicone oil, KF6015 (trade name) produced by Shin-Etsu Silicone Co., Ltd.,

HLB: 4.5, chain length of PEO chain: 3, viscosity: 130 $mm^2/s$), 5 parts by weight of hydrophilic silicone oil 2 (polyether-modified silicone oil, KF6016 (trade name) produced by Shin-Etsu Silicone Co., Ltd., HLB: 4.5, chain length of PEO chain: 9, viscosity: 150 $mm^2/s$), 25 parts by weight of hydrophobic silicone oil 1 (non-reactive silicone oil, KF96-100 (trade name) produced by Shin-Etsu Silicone Co., Ltd.), and 30 parts by weight of hydrophobic silicone oil 2 (non-reactive silicone oil, KF415 (trade name) produced by Shin-Etsu Silicone Co., Ltd.).

(Examples 7 to 21)

Coating film forming compositions of Examples 7 to 21 were prepared in the same manner as in Example 1, except for changing the kind and amount used of the silicone resin, hydrophilic silicone oil and hydrophobic silicone oil to the kind and amount as shown in Table 1.

(Comparative Example 1)

A coating film forming composition of Comparative Example 1 was prepared by mixing 100 parts by weight of silicone resin 2 (addition-type silicone resin, KE-1950-50 (trade name) produced by Shin-Etsu Silicone Co., Ltd.), 20 parts by weight of hydrophilic silicone oil 3 (polyether-modified silicone oil, KF6013 (trade name) produced by Shin-Etsu Silicone Co., Ltd., HLB: 10, chain length of PEO chain: 9, viscosity: 400 $mm^2/s$), and 70 parts by weight of hydrophobic silicone oil 1 (non-reactive silicone oil, KF96-100 (trade name) produced by Shin-Etsu Silicone Co., Ltd.).

(Comparative Example 2)

A coating film forming composition of Comparative Example 2 was prepared by mixing 100 parts by weight of silicone resin 2 (addition-type silicone resin, KE-1950-50 (trade name) produced by Shin-Etsu Silicone Co., Ltd.), 30 parts by weight of hydrophilic silicone oil 4 (polyether-modified silicone oil, KF6017 (trade name) produced by Shin-Etsu Silicone Co., Ltd., HLB: 4.5, chain length of PEO chain: 10, viscosity: 530 $mm^2/s$), and 60 parts by weight of hydrophobic silicone oil 1 (non-reactive silicone oil, KF96-100 (trade name) produced by Shin-Etsu Silicone Co., Ltd.).

(Comparative Example 3)

A coating film forming composition of Comparative Example 3 was prepared by mixing 100 parts by weight of silicone resin 1 (addition-type silicone resin, KE-1935 (trade name) produced by Shin-Etsu Silicone Co., Ltd.), and 60 parts by weight of hydrophobic silicone oil 3 (non-reactive silicone oil, KF50-100 (trade name) produced by Shin-Etsu Silicone Co., Ltd.).

(Comparative Examples 4 to 11)

Coating film forming compositions of Comparative Examples 4 to 11 were prepared in the same manner as in Comparative Example 1, except for changing the kind and amount used of the silicone resin, hydrophilic silicone oil and hydrophobic silicone oil to the kind and amount as shown in Table 1.

(Formation of coating film)

Each coating film forming composition of the examples and comparative examples was applied onto the surface of a PET film (LUMIRROR (trade name) produced by Toray Industries, Inc.) having a size of 30 cm long, 25 cm wide and 0.75 cm thick by an applicator and cured to form a coating film having a thickness of 100 μm. Thus, a measurement sample was prepared.

The curing condition of the coating film forming composition is the heating at 150°C for 3 minutes in Examples 1 to 5 and Comparative Examples 1 to 3 (using an addition-type silicone resin). The curing condition of the coating film forming composition is the heating at room temperature for 12 hours in Examples 6 to 21 and Comparative Examples 4 to 11 (using a condensation-type silicone resin).

(Water contact angle after water dropping)

Regarding each measurement sample of the examples and comparative examples, a water contact angle after the lapse of 5 minutes after 2 μl of water was dropped on the surface of the coating film was measured using a contact angle meter (Drop Master, produced by Kyowa Interface Science Co., Ltd.) by a sessile drop method according to JIS R 3257.

(Water contact angle after methanol contact and water dropping)

Each measurement sample of the examples and comparative examples was dipped in a container containing 1,000 ml of methanol for 3 hours. The measurement sample was taken out of the container and dried at 80°C for 1 hour to remove methanol. The water contact angle on the surface of the coating film after the lapse of 5 minutes after 2 μl of water was dropped on the surface of the coating film was measured using a contact angle meter (Drop Master, produced by Kyowa Interface Science Co., Ltd.) by a sessile drop method according to JIS R 3257.

(Elastic modulus)

Each measurement sample of the examples and comparative examples was cut into a size such that an area of the coating film is 20 mm × 60 mm, and elastic modulus of the coating film was evaluated using a tensile tester (apparatus name: AUTOGRAPH AGS-X, produced by Shimadzu Corporation)

Composition and each measurement/test result of each coating film forming composition of examples and comparative examples are shown in Table 1.

[Table 1]

| | Si resin | | | | Hydrophilic Si oil | | | | | | | | | | | |
|---|---|---|---|---|---|---|---|---|---|---|---|---|---|---|---|---|
| | KE-1935 | KE-1950-50 | KE-17 | KE-108 | Silwet L-7602 | KF6015 | KF6016 | Silwet L-7600 | FZ-2162 | Silwet L-7604 | Silwet L-7622 | TSF 4440 | Silwet L-7657 | TSF4445 | KF6013 | KF6017 |
| HLB | | | | | 7.3 | 4.5 | 4.5 | 14 | 14 | 10 | 8 | 14 | 12 | 7 | 10 | 4.5 |
| Viscosity ($mm^2/s$) | | | | | 100 | 130 | 150 | 110 | 180 | 420 | 400 | 160 | 600 | 800 | 400 | 530 |
| Terminal | | | | | $CH_3$ | OH | $CH_3$ | $CH_3$ | OH | OH | $CH_3$ | | OH | | OH | OH |
| Example 1 | 100 | | | | | 10 | 5 | | | | | | | | | |
| Example 2 | 100 | | | | | | 15 | | | | | | | | | |
| Example 3 | 100 | | | | | 15 | | | | | | | | | | |
| Example 4 | 100 | | | | | | 15 | | | | | | | | | |
| Example 5 | 100 | | | | | 10 | 5 | | | | | | | | | |
| Example 6 | | | 100 | | | 10 | 5 | | | | | | | | | |
| Example 7 | | | | 100 | 20 | | | | | | | | | | | |
| Example 8 | | | 100 | | | | 20 | | | | | | | | | |
| Example 9 | | | 100 | | | | 30 | | | | | | | | | |
| Example 10 | | | 100 | | | | 30 | | | | | | | | | |
| Example 11 | | | 100 | | | | 10 | | | | | | | | | |
| Example 12 | | | | 100 | | | | 20 | | | | | | | | |
| Example 13 | | | 100 | | | | 40 | | | | | | | | | |
| Example 14 | | | | 100 | | | | | 20 | | | | | | | |
| Example 15 | | | | 100 | | | | | | 20 | | | | | | |
| Example 16 | | | | 100 | | | | | | | 20 | | | | | |
| Example 17 | | | | 100 | | | | | | | | 20 | | | | |
| Example 18 | | | 100 | | | | 20 | | | | | | | | | |
| Example 19 | | | 100 | | | | 20 | | | | | | | | | |
| Example 20 | | | 100 | | | | 20 | | | | | | | | | |
| Example 21 | | | 100 | | | | 20 | | | | | | | | | |
| Comparative Example 1 | | 100 | | | | | | | | | | | | | 20 | |
| Comparative Example 2 | | 100 | | | | | | | | | | | | | | 30 |
| Comparative Example 3 | 100 | | | | | | | | | | | | | | | |
| Comparative Example 4 | | | | 100 | | | | | | | | | 20 | | | |
| Comparative Example 5 | | | | 100 | | | | | | | | | | 20 | | |
| Comparative Example 6 | | | 100 | | | | 5 | | | | | | | | | |
| Comparative Example 7 | | | 100 | | | | 10 | | | | | | | | | |
| Comparative Example 8 | | | 100 | | | | 53 | | | | | | | | | |
| Comparative Example 9 | | | 100 | | | | 5 | | | | | | | | | |
| Comparative Example 10 | | | | 100 | | | | | | | | | | | 20 | |
| Comparative Example 11 | | | | 100 | | | | | | | | | | | | 20 |

[Table 1 (Cont'd)]

| | Hydrophobic Si oil | | | | | | | Hydrophobic/ hydrophilic Si oil ratio | Water contact angle | | Elastic modulus [MPa] |
|---|---|---|---|---|---|---|---|---|---|---|---|
| | KF-96-100 | KF415 | KF50-100 | KF96-50 | KF50-300 | KF50-1000 | KF50-3000 | | Initial | Methanol dipping | |
| HLB | | | | | | | | | After water dropping | After 3 hours | |
| Viscosity ($mm^2/s$) | 100 | 630 | 100 | 50 | 300 | 1000 | 3000 | | | | |
| Terminal | | | | | | | | | | | |
| Example 1 | 25 | 30 | | | | | | 3.7 | 21 | 58 | 0.25 |
| Example 2 | 25 | 30 | | | | | | 3.7 | 25 | 48 | 0.26 |
| Example 3 | 25 | 30 | | | | | | 3.7 | 35 | 59 | 0.24 |
| Example 4 | 55 | | | | | | | 3.7 | 27 | 54 | 0.27 |
| Example 5 | 55 | | | | | | | 3.7 | 22 | 58 | 0.26 |
| Example 6 | 25 | 30 | | | | | | 3.7 | 36 | 60 | 0.25 |
| Example 7 | | | 60 | | | | | 3.0 | 4 | 40 | 0.16 |
| Example 8 | | | 60 | | | | | 3.0 | 20 | 54 | 0.22 |
| Example 9 | | | 50 | | | | | 1.7 | 26 | 55 | 0.23 |
| Example 10 | | | 50 | | | | | 1.7 | 26 | 58 | 0.2 |
| Example 11 | | | 70 | | | | | 7.0 | 21 | 65 | 0.23 |
| Example 12 | | | 60 | | | | | 3.0 | 17 | 66 | 0.22 |
| Example 13 | | | 40 | | | | | 1.0 | 33 | 68 | 0.33 |
| Example 14 | | | 60 | | | | | 3.0 | 9 | 70 | 0.21 |
| Example 15 | | | 60 | | | | | 3.0 | 24 | 75 | 0.2 |
| Example 16 | | | 60 | | | | | 3.0 | 13 | 76 | 0.2 |
| Example 17 | | | 60 | | | | | 3.0 | 5 | 79 | 0.18 |
| Example 18 | | | | 60 | | | | 3.0 | 38 | 67 | 0.2 |
| Example 19 | | | | | 60 | | | 3.0 | 32 | 53 | 0.22 |
| Example 20 | | | | | | 60 | | 3.0 | 38 | 41 | 0.3 |
| Example 21 | | | | | | | 60 | 3.0 | 38 | 34 | 0.23 |
| Comparative Example 1 | 70 | | | | | | | 3.5 | 53 | 99 | 0.05 |
| Comparative Example 2 | 60 | | | | | | | 2.0 | 54 | 103 | 0.29 |
| Comparative Example 3 | | | 60 | | | | | - | 101 | 104 | 0.23 |
| Comparative Example 4 | | | 60 | | | | | 3.0 | 16 | 88 | 0.22 |
| Comparative Example 5 | | | 60 | | | | | 3.0 | 15 | 90 | 0.23 |
| Comparative Example 6 | | | 75 | | | | | 15.0 | 20 | 92 | 0.23 |
| Comparative Example 7 | | | 70 | | | | | 7.0 | 22 | 94 | 0.21 |
| Comparative Example 8 | | | 27 | | | | | 0.5 | 34 | 94 | 0.3 |
| Comparative Example 9 | | | 75 | | | | | 15.0 | 24 | 96 | 0.24 |
| Comparative Example 10 | | | 60 | | | | | 3.0 | 39 | 97 | 0.24 |
| Comparative Example 11 | | | 60 | | | | | 3.0 | 37 | 98 | 0.2 |

[Silicone resin]

KE-1935 (produced by Shin-Etsu Silicone Co., Ltd.)
KE-1950-50 (produced by Shin-Etsu Silicone Co., Ltd.)
KE-17 (produced by Shin-Etsu Silicone Co., Ltd.)
KE-108 (produced by Shin-Etsu Silicone Co., Ltd.)

[Hydrophilic silicone oil]

Silwet L-7602 (HLB: 7.3, viscosity: 100 $mm^2/s$, terminal: $CH_3$) (Momentive Performance Materials Inc.)
KF6015 (HLB: 4.5, PEO chain length: 3, viscosity: 130 $mm^2/s$, terminal: OH) (produced by Shin-Etsu Silicone Co., Ltd.)
KF6016 (HLB: 4.5, PEO chain length: 9, viscosity: 150 $mm^2/s$, terminal: $CH_3$) (produced by Shin-Etsu Silicone Co., Ltd.)
Silwet L-7600 (HLB: 14.3, viscosity: 110 $mm^2/s$, terminal: $CH_3$) (Momentive Performance Materials Inc.)
FZ-2162 (HLB: 14, viscosity: 180 $mm^2/s$, terminal: OH) (Dow Corning Toray Co., Ltd.)
Silwet L-7604 (HLB: 10.6, viscosity: 420 $mm^2/s$, terminal: OH) (Momentive Performance Materials Inc.)
Silwet L-7622 (HLB: 8, PEO chain length: 10, viscosity: 400 $mm^2/s$, terminal: $CH_3$) (Momentive Performance Materials Inc.)
TSF4440 (HLB: 14, viscosity: 160 $mm^2/s$) (Momentive Performance Materials Inc.)
Silwet L-7657 (HLB: 12.9, viscosity: 600 $mm^2/s$, terminal: OH) (Momentive Performance Materials Inc.)
TSF4445 (HLB: 7, viscosity: 800 $mm^2/s$) (Momentive Performance Materials Inc.)
KF6013 (HLB: 10, PEO chain length: 9, viscosity: 400 $mm^2/s$, terminal: OH) (produced by Shin-Etsu Silicone Co., Ltd.)
KF6017 (HLB: 4.5, PEO chain length: 10, viscosity: 530 $mm^2/s$, terminal: OH) (produced by Shin-Etsu Silicone Co., Ltd.)

[Hydrophobic silicone oil]

KF-96-100 (produced by Shin-Etsu Silicone Co., Ltd.)
KF-96-50 (produced by Shin-Etsu Silicone Co., Ltd.)
KF415 (produced by Shin-Etsu Silicone Co., Ltd.)
KF50-100 (produced by Shin-Etsu Silicone Co., Ltd.)
KF50-300 (produced by Shin-Etsu Silicone Co., Ltd.)
KF50-1000 (produced by Shin-Etsu Silicone Co., Ltd.)
KF50-3000 (produced by Shin-Etsu Silicone Co., Ltd.)

(Aquatic organism adhesion test)

Aquatic organism adhesion test was conducted using the measurement samples of Examples 1 to 6 and 8 and Comparative Examples 1 to 3 in the following procedures.

A coating film having a thickness of 100 μm was formed on a PMMA plate (DERAGLASS K (trade name) produced by Asahikasei Techonoplus Corporation, methyl methacrylate polymer: 96.6% or more). The coating film obtained was dipped in the sea of the coast of Himeji-City in a water depth of 1 m. After dipping for 36 months, whether or not aquatic organisms are adhered to the surface of the antifouling surface was evaluated by the following criteria and the results obtained are shown in Table 2.
○: Adhesion of animal organisms is not observed and adhesion of algae is not observed.
Δ: Adhesion of animal organisms is not observed but adhesion of algae is observed.
×: Adhesion of animal organisms is observed and adhesion of algae is observed.

[Table 2]

| | Adhesion test |
|---|---|
| Example 1 | ○ |
| Example 2 | ○ |
| Example 3 | ○ |
| Example 4 | ○ |
| Example 5 | ○ |
| Example 6 | ○ |

(continued)

| | Adhesion test |
|---|---|
| Example 8 | ○ |
| Comparative Example 1 | × |
| Comparative Example 2 | × |
| Comparative Example 3 | × |

(Formation of surface oil layer)

Water (2 μl) was dropped on the surface of a coating film of the measurement sample of Example 5, and the surface of the coating film after the lapse of 5 minutes was analyzed with a time-of-flight secondary ion mass spectrometer (TOF, SIMS5, produced by ION-TOF (Germany)). As a result, it was confirmed that an oil layer was formed on the surface of the coating film. The thickness of the oil layer was about 50 nm.

Incidentally, formation of the oil layer was confirmed on the surface of the coating film in the examples other than Example 5 and the comparative examples.

In Examples 1 to 21, the water contact angle after water dropping and the water contact angle after methanol contact and water dropping are within the range defined in the present invention, and the results of the aquatic organism adhesion test was good (adhesion was not observed) in Examples 1 to 6 and 8. In particular, when an oil having low HLB and low viscosity was selected as the hydrophilic oil and the ratio to the hydrophobic oil is set to fall within the predetermined range, the water contact angle after water dropping and the water contact angle after methanol contact and water dropping can be 60° or less, and in addition, it was confirmed that the coating film can exhibit higher antifouling property.

On the other hand, in Comparative Examples 1 and 2 in which the water contact angle after methanol contact and water dropping is outside the range defined in the present invention, the result of the aquatic organism adhesion test was poor (adhesion was observed). In addition, in Comparative Example 3 in which the water contact angle after water dropping and the water contact angle after methanol contact and water dropping are outside the range defined in the present invention, the result of the aquatic organism adhesion test was poor (adhesion was observed).

The present invention has been described by reference to the preferred embodiments. However, the present invention is not limited to the embodiments described above, and various modifications or changes can be added to the embodiments described above to the extent that the scope of the present invention is not deviated.

INDUSTRIAL APPLICABILITY

The coating film forming composition of the present invention can form a coating film stably exhibiting an inhibiting effect on the adhesion of aquatic organisms even in the presence of physical factors such as water flow in the water. The coating film forming composition of the embodiment can be used in an adherend such as an underwater structure (for example, a ship, a buoy, a harbor facility, a maritime oil field facility, a waterway for power plant cooling water, a waterway for factory cooling water, a water floating passage or various sensors)

Although the present invention has been described in detail and by reference to the specific embodiments, it is apparent to one skilled in the art that various modifications or changes can be made without departing from the spirit and scope of the present invention.

This application is based on Japanese Patent Application No. 2017-072838 filed March 31, 2017, the disclosure of which is incorporated herein by reference.

## Claims

1. A coating film forming composition for forming a coating film, the coating film forming composition containing a silicone resin and a silicone oil,
wherein a coating film formed of the coating film forming composition satisfies the following (1) and (2):

    (1) a water contact angle of the coating film after the elapse of 5 minutes after dropping water on the coating film is 80° or less; and
    (2) a water contact angle of the coating film after the elapse of 5 minutes after bringing the coating film into contact with methanol for 3 hours, followed by dropping water on the coating film is 80° or less.

2. The coating film forming composition as claimed in claim 1, wherein the water contact angle of the coating film after the elapse of 5 minutes after bringing the coating film into contact with methanol for 3 hours, followed by dropping water on the coating film in (2) is 60° or less.

3. The coating film forming composition as claimed in claim 1 or 2, wherein the silicone oil contains a hydrophilic silicone oil.

4. The coating film forming composition as claimed in claim 3, wherein the silicone oil further contains a hydrophobic silicone oil.

5. The coating film forming composition as claimed in claim 3 or 4, wherein the hydrophilic silicone oil has an HLB of 15 or less.

6. A coating film formed of the coating film forming composition as claimed in any one of claims 1 to 5.

7. The coating film as claimed in claim 6, which has an elastic modulus of 0.1 MPa or more.

8. An adhesive sheet comprising the coating film as claimed in claim 6 or 7, a base material and a pressure-sensitive adhesive layer, in this order.

FIG. 1

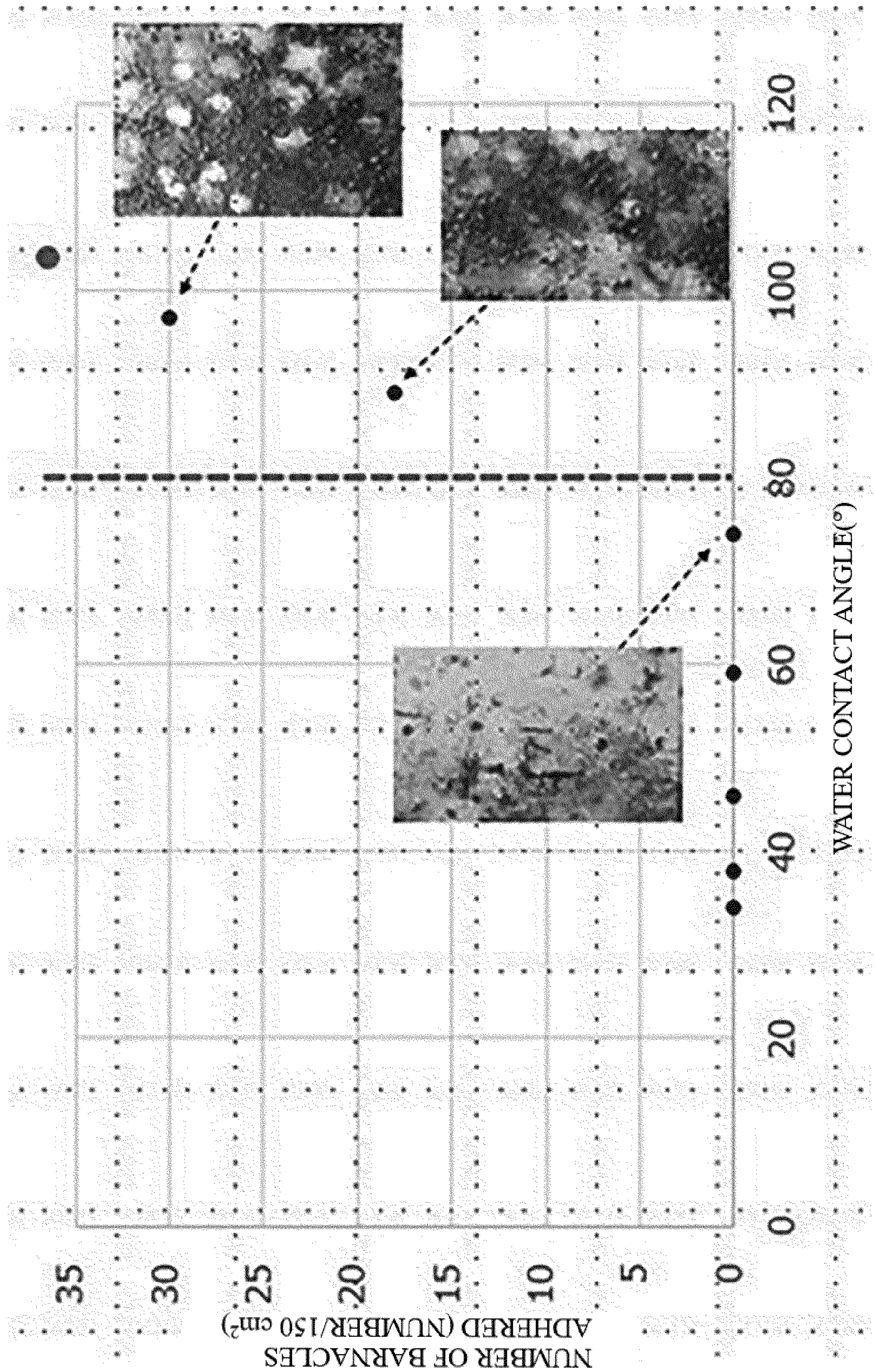
WATER CONTACT ANGLE(°)
NUMBER OF BARNACLES ADHERED (NUMBER/150 cm²)
0
20
40
60
80
100
120
0
5
10
15
20
25
30
35

FIG. 2

PLACE: GAMAGORI, AICHI (MIKAWA BAY)

WATER DEPTH: 1 m

DIPPING PERIOD: JUNE 14 TO JULY 7, 2017

| | WATER CONTACT ANGLE |
|---|---|
| No.50 | 17.4 |
| No.51 | 27.8 |
| No.52 | 41.4 |
| No.58 | 54.4 |
| No.59 | 58.4 |
| No.60 | 64.7 |
| No.61 | 76.5 |
| No.62 | 100.9 |

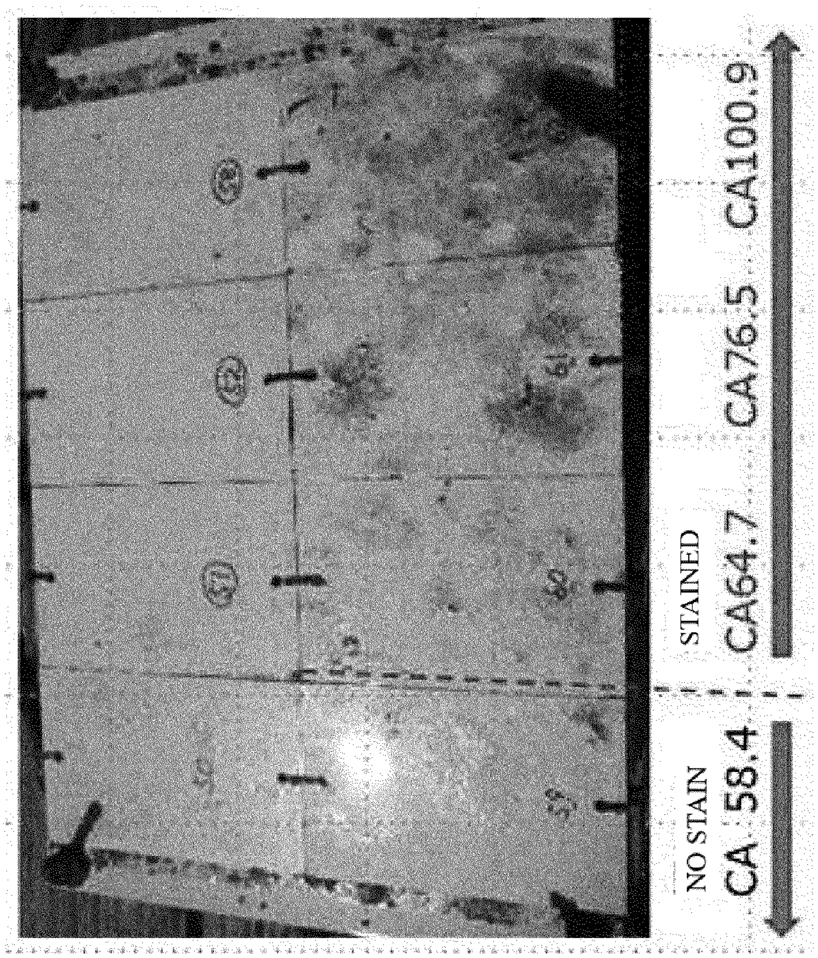

FIG. 3

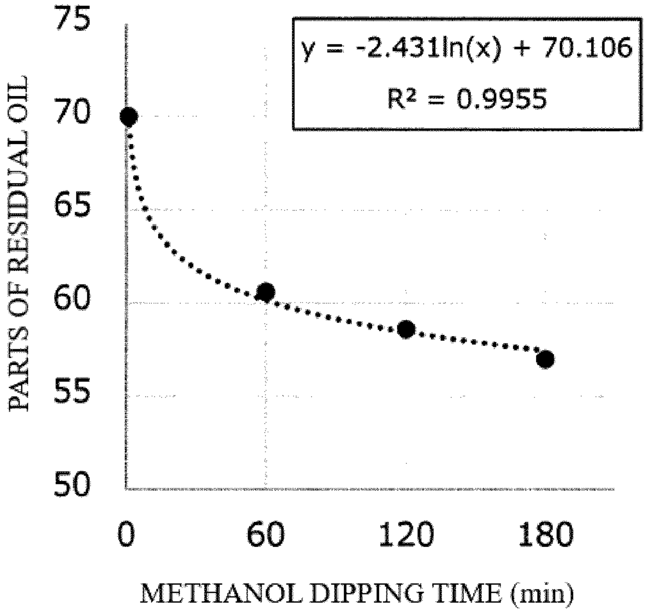
y = -2.431ln(x) + 70.106
R² = 0.9955
PARTS OF RESIDUAL OIL
75
70
65
60
55
50
0
60
120
180
METHANOL DIPPING TIME (min)

## INTERNATIONAL SEARCH REPORT

International application No.
PCT/JP2018/013997

A. CLASSIFICATION OF SUBJECT MATTER
Int.Cl. C09D183/04(2006.01)i, C09D5/16(2006.01)i, C09D7/65(2018.01)i, C09J7/20(2018.01)i

According to International Patent Classification (IPC) or to both national classification and IPC

B. FIELDS SEARCHED

Minimum documentation searched (classification system followed by classification symbols)
Int.Cl. C09D183/04, C09D5/16, C09D7/65, C09J7/20

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2010-13591 A (SHIN-ETSU CHEMICAL CO., LTD.) 21 January 2010, claims 1-3 & US 2010/0003211 A1 (examples 1-3) | 1, 2, 6, 7<br>8<br>3-5 |
| X<br>Y | JP 2007-56052 A (DOW CORNING TORAY CO., LTD.) 08 March 2007, paragraph [0021], examples 5, 6 (Family: none) | 1-7<br>8 |
| X<br>Y<br>A | WO 01/060923 A1 (DAIKIN INDUSTRIES, LTD.) 23 August 2001, examples 55-72, 91-96, 115-120 (Family: none) | 1-3, 5-7<br>8<br>4 |
| Y | JP 2016-29121 A (NITTO DENKO CORP.) 03 March 2016, paragraphs [0055]-[0078] (Family: none) | 8 |
| A | JP 8-231898 A (SHIN-ETSU CHEMICAL CO., LTD.) 10 September 1996, entire text (Family: none) | 1-8 |
| A | JP 9-12413 A (SHIN-ETSU CHEMICAL CO., LTD.) 14 January 1997, entire text (Family: none) | 1-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 June 2018 (25.06.2018) | 03 July 2018 (03.07.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6025559 A
- JP 2017072838 A